# EUROPEAN PATENT APPLICATION

(11) **EP 0 650 242 A1**
(43) Date of publication of application: **26.04.1995**
(21) Application number: 94115840.4
(22) Date of filing: 07.10.1994
(51) Int. Cl.: H02K 5/12, H01F 27/02

(54) **Method of manufacturing water-submersible electromechanical devices and device obtained through said method**

(30) Priority: 26.10.1993 IT VE930029
(71) Applicant: HYDOR S.r.l., I-36061 Bassano del Grappa (VI) (IT)
(72) Inventor: Bresolin, Valerio, I-36061 Bassano Del Grappa (IT); Lolato, Samuele, I-36022 Pove Del Grappa (IT)
(74) Representative: Piovesana, Paolo

(57) **Abstract**

A method for manufacturing water-submersible electromechanical devices characterized in that:
- the components of the electromechanical device to be realized are inserted inside a substantially rigid casing (2) made of insulating material;
- a resin (22) having a mineral filling and suitable electric insulation and thermal conductivity properties is cast inside said casing;
- after solidification of said resin a second resin (24) having electric insulation properties is cast inside the same casing (2).

## Description

The present invention relates to a method of manufacturing water-submersible electromechanical devices and a device obtained through said method.

The international standards establishing the electric insulation requirements for electromechanical devices intended to operate submersed in water (such as acquarium pumps) dictate that insulation class II devices must have a double insulation between electrical live parts and the environment: i.e. there must be two separate insulation layers physically separated and determining a structural discontinuity between themselves, in order to prevent the propagation of the possible failure of one insulation to the other.

Currently, insulation class II electromechanical devices are enclosed in a casing made of a hard plastic material which makes up both the outer insulation layer and the walls of the mould for casting the resin constituting the inner insulation.

Since the casing must be open on one side in order to allow the insertion of the electric device, the double insulation on this side is obtained, after casting the resin, by means of a cover welded along the edge of the casing, preferably by ultrasonic welding.

A drawback of this known solution consists in the difficulty of making a good welding because of the presence of the power supply cable and its lock.

Another drawback consists in that the presence of the supply cable requires the necessity of inserting a rubber plug between the cable and the cover to assure tightness between said parts: the result of this operation is uncertain and represents an additional cost.

Another drawback of the ultrasonic welding consists in that it causes the acoustic pollution of the working environment, so that the operators must wear protecting headphones.

Another drawback consists in that the resin cast inside the casing must have a mineral filling in order to display effective heat dissipation, but the mineral filling limits mechanical and physical characteristics of the insulation layer.

Yet another drawback consists in that the welding between casing and cover requires that both be designed for this purpose: so it is difficult to perform welding on devices already designed.

JP-A-58163241 discloses a mechanically flexible casing for an electric device. The casing is constitued by a glass-fiber fabric impregnated with resin and as such it cannot be applied in position difficult to reach nor it can penetrate small interstices.

The aim of the invention is to overcope the drawbacks and limitations of prior art methods.

This aim and further ones which will result from the following description are attained according to the invention through a method of manufacturing water-submersible electromechanical devices as described in claim 1.

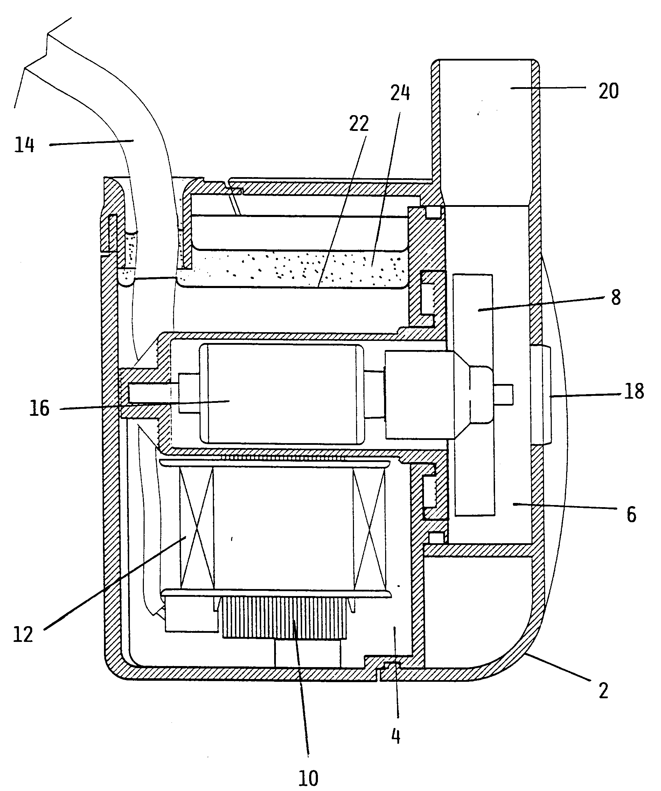

The present invention is hereinafter further clarified in a preferred embodiment with reference to the accompanying drawing showing a schematic vertical section of an electromechanical device manufactured according to the method of the present invention.

As can be seen in the drawing the electromechanical device (in this particular case a submersible pump suitable for aquarium use) comprises a casing made of a hard plastic material, indicated as a whole by 2, and including a cavity 4 intended to house the electric motor and a cavity 6 intended to house the impeller 8 of the pump.

The electric motor comprises a lamination 10, a coil 12 powered by a cable 14 and a magnetic rotor 16.

To the rotor shaft 16 is connected the impeller 8 that draws water in from an axial opening 18 and pipes it towards the exit duct 20.

In order to manufacture the pump described above, after all the components have been placed inside the casing 2, a resin is cast into the cavity 4 in such an amount as to reach the level 22 which assures that all said components have been covered. This resin must display good electric insulation properties, to assure the electric insulation of the live parts from the environment, and at the same time it must have a good thermal conductivity, to allow the dissipation of the heat generated when the pump is working.

This is obtained by adding to the resin a suitable filling material.

After complete solidification of this resin, as a result of well known treatments to which it must have been subjected, the method according to the invention requires that a second resin 24 be cast on top of the first.

Said second resin must not necessarily exhibit thermal conductivity and hence needs not necessarily be filled.

As a consequence, mechanical strength, flexibility, wettability and adhesion characteristics of this second resin can be improved even to a large extent with respect to the first filled resin.

In practice, according to the invention, the prior art closing cover of the casing 2 is substituted by a layer of cast resin, thus eliminating all the drawbacks related with the use of said cover while achieving a number of improvements thanks to the resin layer.

In particular:
- eliminating the cover reduces the number of components, and avoids welding to the casing, use of ultrasonic equipment and environmental pollution,
- thanks to the resin layer, special mechanical and physical characteristics can be obtained, that could not have been obtained with the filled resin alone, although the filled resin remains necessary to get thermal conductivity,
- substituting a cast resin layer for the cover renders the method according to the invention suitable nearly for whatever electromechanical device, in particular for those already designed, gears the production very quickly to the standards and allows the use of a single plant even for a number of different models.

## Claims

1. A method for manufacturing water-submersible electromechanical devices characterized in that:
- the components of the electromechanical device to be realized are inserted inside a substantially rigid casing made of insulating material;
- a resin having a mineral filling and suitable electric insulation and thermal conductivity properties is cast inside said casing;
- after solidification of said resin a second resin having electric insulation properties is cast inside the same casing.

2. A method as claimed in claim 1 characterized in that for the second insulating layer a resin with high mechanical strength is used.

3. A method as claimed in claim 1 characterized in that for the second insulating layer a resin with high flexibility is used.

4. A method as claimed in claim 1, characterized in that for the second insulating layer a resin with high wettability is used.

5. A method as claimed in claim 1, characterized in that for the second insulating layer a resin with high adhesion characteristics is used.

6. A method as claimed in claim 1, characterized in that for the second insulating layer a resin with dielectric characteristics is used.

7. A water-submersible electromechanical device characterized in that said device is manufactered with the method according to any of claims 1-6.
